## Europäisches Patentamt

## European Patent Office

## Office européen des brevets

(19)

(11) Veröffentlichungsnummer: **0 120 407**

**B1**

(12)    **EUROPÄISCHE PATENTSCHRIFT**

(45)    Veröffentlichungstag der Patentschrift:
04.11.87

(21)    Anmeldenummer: **84102781.6**

(22)    Anmeldetag: **14.03.84**

(51)    Int. Cl.⁴: **F 16 C 29/04**

(54)    **Linear- oder Rotationsführung.**

(30)    Priorität: **29.03.83 CH 1745/83**

(43)    Veröffentlichungstag der Anmeldung:
**03.10.84 Patentblatt 84/40**

(45)    Bekanntmachung des Hinweises auf die Patenterteilung:
**04.11.87 Patentblatt 87/45**

(84)    Benannte Vertragsstaaten:
**DE FR GB IT NL**

(56)    Entgegenhaltungen:
**CH-A-326 285**
**DE-C-649 218**
**FR-A-739 913**
**GB-A-2 013 832**
**US-A-3 407 011**

(73)    Patentinhaber: **Moser, Fernand, Sur le Crêt 83 H,
CH- 2606 Corgémont (CH)**

(72)    Erfinder: **Moser, Fernand, Sur le Crêt 83 H, CH-
2606 Corgémont (CH)**

(74)    Vertreter: **Blum, Rudolf Emil Ernst, c/o E. Blum &
Co Patentanwälte Vorderberg 11, CH- 8044 Zürich
(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Linearführung mit einer Schiene und einem relativ dazu bewegbaren Schlitten, wobei die Schiene ein Leistenprofil besitzt, dessen Schmalseiten V-formig nach aussen zusammenlaufende Führungsflächen bilden, auf denen im Schlitten gelagerte Führungskugeln abrollbar sind, wobei die Führungskugeln in Gruppen angeordnet sind, die je eine formschlüssige Zwangsführung bewirken, wobei jede Führungskugelgruppe aus zwei Führungskugelpaaren gebildet ist, und die Kugeln im wesentlichen in einer senkrecht zur Führungsrichtung liegenden Ebene angeordnet sind.

Entsprechende Führungen sind unter anderem in der DE-C-649 218 und bereits beschrieben worden. Bei diesen bisher bekannt gewordenen Führungen besteht das Problem, dass die formschlüssige Zwangsführung entweder eine sehr präzise Bearbeitung der Führungsflächen voraussetzt oder aber, dass die Führung andernfalls nur mit erheblichem Spiel betrieben werden kann, weil sonst die auftretenden Reibungskräfte entlang der Führung stark variieren und unter Umständen eine Verklemmung auftreten kann, insbesondere auch durch allfällige Verformungen des Führungskörpers bei Belastung. Beides ist indessen unerwünscht. Bei einer in der US-A-3 407 011 dargestellten Anordnung wird dem Problem dadurch abgeholfen, dass zwei Führungsrollen, die zwischen sich eine runde Stange aufnahmen, beide mit Spiel montiert sind.

Damit entsteht eine Führung, die sich zwar unterschiedlichen Stangendurchmessern anpassen kann, bei der jedoch ein in allen Richtungen wirkendes, unerwünschtes Spiel entsteht. Ähnlich ist es bei der GB-A-2 013 832, wobei zur Geräuschminderung sämtliche Kugel einer Kugelführung durch Gummielemente gegen die geführte Welle gedrückt werden.

In der französischen Publikation No. 739 913 ist ein Schlitten dargestellt, der auf in einem Bett angeordneten, elastisch verschiebbaren Führungskugeln rollt. Bei Belastung des Schlittens werden diese Führungskugeln ins Bett eingedrückt und der Schlitten damit durch Reibung fixiert. Die auftretende Reibungskraft der Führung ist damit von der Belastung des Schlittens abhängig, was in der Regel unerwünscht ist.

Schliesslich ist in der Schweizer Patentschrift Nr. 326 285 eine Rotationsführung gezeigt, bei welcher ein Drehteller auf einen Tisch mit Führungskugeln aufliegt. Diese Anordnung ist indessen nur einseitig belastbar, weil die Führungskugeln keine formschlüssige Zwangsführung bewirken.

Es stellt sich deshalb auf dem Hintergrund dieser bekannten Anordnungen die Aufgabe, Führungen der eingangs genannten Art derart auszugestalten, dass eine spielarme Führung ohne übermässig präzis bearbeitete Führungsflächen erzielbar ist. Dies wird erfindungsgemäss bei Führungen der eingangs erwähnten Art dadurch erreicht, dass je eine einzeige entsprechende Kugel jeder Gruppe quer zur Führungsrichtung unter elastischer Vorspannung gehalten und in Vorspannungsrichtung verschieblich im Schlitten gelagert ist.

Diese Ausgestaltung erlaubt es, das Spiel von der elastischen Kraft aufnehmen zu lassen und entlang der Führung eine definierte Reibung zu erhalten.

Bei einer bevorzugten Ausführung der Erfindung, bei welcher Jede der Führungskugeln mittels einem Wälzlager im Käfig gelagert ist, dessen Achse senkrecht zur Führungsrichtung verläuft, ist das Wälzlager der unter elastischer Vorspannung gehaltenen Kugel im Käfig axial verschiebbar gelagert und mittels einer Druckfeder in Richtung der entsprechenden Führungsfläche belastbar. Die Vorspannkräfte können damit durch die Wahl der entsprechenden Druckfedern in einfacher Weise eingestellt werden.

Vorzugsweise werden möglichst wenige der Führungskugeln in dieser Weise elastisch angeordnet. Die Anzahl und Anordnung derselben lässt sich im Einzelfall dadurch bestimmen, dass je für eine Gruppe von Führungskugeln, die zusammen eine formschlüssige Zwangsführung bewirken, mindestens eine elastisch unter Vorspannung gehaltene Führungskugel nötig ist.

Nachfolgend wird die Erfindung anhand von Ausführungsbeispielen und insbesondere den in den Figuren dargestellten, naher beschrieben. Es zeigen:

Fig. 1 die Aufsieht auf eine erfindungsgemässe Linearführung;

Fig. 2 eine erste Ausführung in Schnittansicht entlang der Linie II-II in Fig. 1;

Fig. 3 eine zweite, leicht abgewandelte Ausführung in entsprechender Schnittansicht wie Fig. 2;

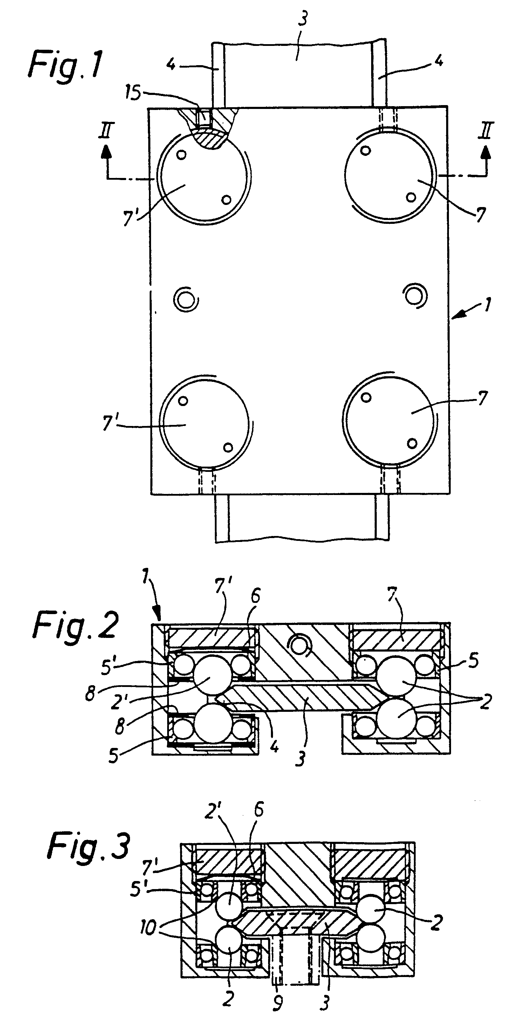

Die in Fig. 1 und 2 dargestellte Linearführung besitzt einen als Schlitten 1 ausgebildeten Käfig, in dem die Führungskugeln 2', 2 gelagert sind. Der Führungskörper ist als flache Leiste 3 mit V-förmig nach aussen zusammenlaufenden Schmalseiten 4 ausgestaltet, welche vier Führungsflächen bilden, längs denen die Führungskugeln 2 abrollen. Diese sind je auf den Kugeln eines Kugellagers 5 gelagert, das als Schräglager auch axiale Kräfte aufnimmt. Die vier in Fig. 2 gezeigten Führungsrollen 2 bilden zusammen eine in einer Ebene liegende Gruppe, welche die Leiste 3 formschlüssig umfassen. Insgesamt weist die gezeigte Linearführung zwei solche Gruppen auf, wie aus Fig. 1 ersichtlich ist. Bei jeder dieser Gruppen ist jeweils eine entsprechende Führungskugel 2' elastisch gelagert, so dass sie unter Vorspannung gegen die entsprechende Führungsfläche 3 steht, während die restlichen Kugeln starr gelagert sind. Die elastische Lagerung wird dadurch bewerkstelligt, dass das entsprechende Kugellager 5' axial verschiebbar im Schlitten 1 gehalten ist, wobei das Kugellager mit einer Feder 6 gegen die Führungsfläche 4 gedrückt wird. Als Feder 6 wird vorzugsweise eine Tellerfeder verwendet, da nur ein sehr geringfügiger Hub notwendig ist, die mit ihrem grossen Radius auf dem Aussenring des Kugellagers 5' aufliegt. Mittels einer Justierschraube 7' kann die Federkraft eingestellt werden. Wie sich aus geometrischen Gründen ohne weiteres einsehen lässt, erfolgt die Drehung der Führungskugeln 2, 2' ausschliesslich in der Achse der Kugellager. Die Ablaufbahn der Führungsflächen 4 auf den Kugeln 2, 2' bildet damit einen Kleinkreis. Aus diesem Grund können einander gegenüberliegende Führungskugeln in der genannten Achse zur Berührung gebracht werden. Dies ist bei der dargestellten Linearführung bei jenem Führungskugelpaar jeder Gruppe der Fall, das keine elastisch vorgespannte Führungskugel aufweist (in Fig. 2 das rechte Kugelpaar). Damit kann die Justierung der Linearführung wesentlich erleichtert werden, ohne deren Funktion irgendwie zu beeinträchtigen. Wird nämlich das besagte Kugelpaar in dieser Weise zur Berührung gebracht, entsteht auf dieser Seite ein definierter Sitz für die Führungsflächen 4, so dass sich die Justierung schliesslich auf die elastisch gelagerte Kugel 2' reduziert. Ein weiterer Vorteil dieser Anordnung liegt darin, dass bei Berührung der Führungskugeln 2 keine Gefahr besteht, dass der Lagerkugelkäfig der Kugellager 5 bei entfernter Leiste 3 herauskippt. Dieser Gefahr wird beim Kugelpaar mit elastischer Vorspannung durch Anbringen eines Halterings 8 vorgebeugt. Überall haben die Führungskugelpaare jedoch so bemessene, gegenseitige Abstände, dass die Führungskugeln selbst sich gegenseitig am Herausfallen hindern.

Die bereits erläuterte Bewegung der Führungskugeln 2, 2' im Betrieb gestattet es, die Führungskugeln auf dem Innenring 10 eines Wälzlagers abzustützen, wie sich aus der Variante gemäss Fig. 3 ergibt. Der Innenring ist dabei leicht angeschliffen, um einen guten Sitz zu gewährleisten. Diese Ausführung hat den Vorteil, dass keine zusätzlichen Massnahmen gegen das Herauskippen der Lagerkugeln ergriffen werden müssen.

Die anhand der erläuterten Beispiele dargestellte Linearführung kann dank der unter elastischer Vorspannung gehaltenen Führungskugel 2' für jede Gruppe mit hinsichtlich der Parallelität der Führungsflächen bearbeitet sind. Dies bezügliche Ungenauigkeiten werden durch die genannte Führungskugel 2' aufgenommen. Die Belastungsweise so gewählt, dass diese Führungskugel nicht einen Hauptteil der Kraft aufzunehmen hat. Im übrigen kann mit der Justierschraube 7' die Vorspannung den hereschenden Kräfteverhältnissen angepasst und mit den übrigen Justierschrauben 7, welche mit je einer Feststellschraube 15 fixierbar sind, die gegenseitige Lage von Leiste 3 und Führungskugeln eingestellt werden.

Wie sich aus Fig. 3 ergibt, kann die Leiste 3 mit einer Gegenplatte 9 zur Verstärkung und Versteifung versehen sein, so dass sie T-Form aufweist.

Die beschriebene Linearführung gestattet eine vielfache Verwendung, insbesondere im Bereich der Mikrotechnik und im mittelgrossen Maschinenbau, wo bei nicht allzu hoher Belastung eine hohe Genauigkeit erforderlich ist, wie etwa bei Industrierobotern. Dabei kann sich die Bearbeitungsgenauigkeit der Führungsflächen im wesentlichen auf die bei der Verwendung geforderte Genauigkeit beschränken und muss für die zufriedenstellenden Führungseigenschaften nicht darüber hinaus gehen. Insbesondere kann eine weitgehende Spielfreiheit erzielt werden.

**Patentansprüche**

1. Linearführung mit einer Schiene (3) und einem relativ dazu bewegbaren Schlitten (1), wobei die Schiene ein Leistenprofil besitzt, dessen Schmalseiten V-förmig nach aussen zusammenlaufende Führungsflächen (4) bilden, auf denen im Schlitten gelagerte Führungskugeln (2, 2') abrollbar sind, wobei die Führungskugeln in Gruppen angeordnet sind, die je eine formschlüssige Zwangsführung bewirken, wobei jede Führungskugelgruppe aus zwei Führungskugelpaaren (2, 2') gebildet ist, und die Kugeln im wesentlichen in einer senkrecht zur Führungsrichtung liegenden Ebene angeordnet sind, dadurch gekennzeichnet, dass je eine einzige entsprechende Kugel (2') jeder Gruppe quer zur Führungsrichtung unter elastischer Vorspannung gehalten und in Vorspannungsrichtung verschieblich im Schlitten gelagert ist.

2. Linearführung nach Anspruch 1, dadurch gekennzeichnet, dass sich die Führungskugeln (2) des einen Paares jeder Gruppe im Bereich ihrer Drehachse gegenseitig berühren und die unter elastischer Vorspannung stehende Führungskugel je beim anderen Kugelpaar vorgesehen ist.

3. Linearführung nach Anspruch 1, wobei jede der Führungskugeln (2, 2') mittels einem Wälzlager (5, 5') im Käfig gelagert ist, dessen Achse senkrecht zur Führungsrichtung verläuft, dadurch gekennzeichnet, dass das Wälzlager (5') der unter elastischer Vorspannung gehaltenen Kugel im Käfig axial verschiebbar gelagert ist und mittels einer Druck-Feder (6) in Richtung der entsprechenden Führungsfläche belastbar ist.

4. Linearführung nach Anspruch 3, dadurch gekennzeichnet, dass das Wälzlager (5) mindestens einen Aussenring aufweist und die Feder als Tellerfeder (6) ausgebildet ist, die mit ihrem grossen Radius auf dem Aussenring aufliegt.

5. Linearführung nach einem der vorangehenden Ansprüche, wobei jede der Führungskugeln (2, 2') mittels einem Wälzlager (5, 5') gelagert ist, dessen Achse senkrecht zur Führungsrichtung verläuft, dadurch gekennzeichnet, dass die Führungskugeln (2, 2') paarweise einander gegenüber liegend angeordnet sind, derart, dass sie sich bei entferntem Führungskörper gegenseitig in ihren Lagern fixieren.

6. Linearführung nach Anspruch 5, dadurch gekennzeichnet, dass eine der Führungskugeln (2, 2') jedes Paares durch axiale Verschiebung des entsprechenden Wälzlagers in ihrer Lage einstellbar ist, während die Lage der jeweils anderen Führungskugel vorgegeben ist.

7. Linear- oder Rotationsführung nach einem der vorangehenden Ansprüche 3 bis 6, dadurch gekennzeichnet, dass das Wälzlager (5, 5') ein Kugellager mit Innen- und Aussenring ist, wobei die Führungskugel (2, 2') jeweils auf dem Innenring (10) sitzt und einen grösseren Durchmesser als dessen Innendurchmesser aufweist.

8. Linearführung nach Anspruch 6, dadurch gekennzeichnet, dass jeweils die auf derselben Seite der Schiene (3) gelegenen Führungskugeln (2, 2') in ihrer Lage durch axiale Verschiebung der zugehörigen Wälzlager justierbar sind.


**Claims**

1. Linear guiding assembly having a rail (3) and a sliding carriage movable relatively to said rail, said rail having a flat profile and being provided with guide surfaces (4) on its narrow sides converging in a V-shaped manner to the outside, said sliding carriage having a set of grouped guiding balls (2, 2') supported therein and adapted to roll on said guide surfaces of said rail to provide a form-locked support by each group, whereby each of the groups of guiding balls being constituted by two guiding pairs (2, 2') of balls, and wherein the balls substantially are placed in a plane perpendicular to the guiding direction, characterized in that in each group one only corresponding ball is elastically biased transversely to the guiding direction and is, in the biasing direction, displaceably supported in the sliding carriage.

2. The assembly of claim 1, characterized in that the guiding balls (2) of the one pair of each of the groups contact each other at the area of their axis of rotation and wherein the other pair of balls comprises said elastically biased ball.

3. The assembly of claim 1, wherein each of the guiding balls (2, 2') is supported by a roller bearing (5, 5') within a housing, the roller bearings having their axis perpendicular to the guiding direction, characterized in that the roller bearing (5') of the displaceably supported guiding ball is mounted within said housing to be axially displaceable and to be biased in direction of the respective guiding surface by means of a pressure spring (6).

4. The assembly of claim 3, characterized in that the roller bearing (5) has at least an outer race, and wherein said pressure spring is a spring washer (6), which with its bigger radius contacts said outer race of the roller bearing.

5. The assembly according to one of the preceding claims, wherein each of the guiding balls (2, 2') is supported by a roller bearing (5, 5') having its axis perpendicular to the guiding direction, characterized in that the guiding balls (2, 2') are placed in pairs opposite to each other, such that the balls hold each other in place when the guiding body is apart.

6. The assembly according to one of the preceding claims, characterized in that one of the guiding balls (2, 2') of each pair is adjustable in its position by axial displacement of the respective roller bearing, whereas the position of the other ball of said each pair is fixed.

7. Linear or rotational guiding assembly according to one of the preceding claims 3 to 6, characterized in that the roller bearing (5, 5') having an outer race and an inner race, whereby the guiding ball (2, 2') is placed on the respective inner race (10) and having a diameter greater than the inner diameter of the inner race.

8. The assembly of claim 6, characterized in that the balls (2, 2') on one and the same side of the rail (3) are adjustable in their position by axial replacement of the respective roller bearing.


**Revendications**

1. Dispositif de guidage en translation, avec un rail (3) et un chariot (1) mobile par rapport à lui, le rail ayant un profil de réglette dont les côtés étroits forment des surfaces de guidage (4) convergentes vers l'extérieur, en forme de V, le long desquelles peuvent rouler des billes de guidage (2, 2') montées dans le chariot, les billes de guidage étant disposées en groupes qui créent chaque fois un guidage obligé avec adaptation des formes, chaque groupe de billes de guidage étant formé de deux paires (2, 2') de billes de guidage, et les billes étant disposées en principe dans un plan perpendiculaire à la direction du guidage, caractérisé en ce qu'une bille correspondante unique (2') de chaque groupe est maintenue sous tension élastique préalable, transversalement à la direction du guidage et est montée de manière déplaçable dans le chariot, dans la direction de la tension préalable.

2. Dispositif de guidage en translation suivant la revendication 1, caractérisé en ce que les billes de guidage (2) de l'une des paires de chaque groupe se touchent mutuellement dans la région de leur axe de rotation et en ce que la bille de guidage se trouvant sous tension élastique préalable est prévue chaque fois dans l'autre paire de billes.

3. Dispositif de guidage en translation suivant la revendication 1, où chacune des billes de guidage (2, 2′) est montée au moyen d'un palier de roulement (5, 5′) dans la cage dont l'axe s'étend perpendiculairement à la direction du guidage, caractérisé en ce que le palier à roulement (5′) de la bille maintenue sous tension élastique préalable est monté de manière déplaçable axialement dans la cage et peut être chargé au moyen d'un ressort de compression (6) en direction de la surface de guidage correspondante.

4. Dispositif de guidage en translation suivant la revendication 3, caractérisé en ce que le palier à roulement (5) présente au moins une bague extérieure et en ce que le ressort est conformé en ressort à disques (6) qui porte sur la bague extérieure par son rayon le plus grand.

5. Dispositif de guidage en translation suivant l'une quelconque des revendications précédentes, où chacune des billes de guidage (2, 2′) est montée au moyen d'un palier à roulement (5, 5′) dont l'axe s'étend perpendiculairement à la direction du guidage, caractérisé en ce que les billes de guidage (2, 2′) sont disposées en se trouvant par paires l'une en face de l'autre, de telle sorte qu'elles se fixent mutuellement dans leurs montures lorsque le corps de guidage est éloigné.

6. Dispositif de guidage en translation suivant la revendication 5, caractérisé en ce que l'une des billes de guidage (2, 2′) de chaque paire est réglable dans sa position par déplacement axial du palier à roulement correspondant, tandis que la position de la bille de guidage, autre chaque fois, est fixée à l'avance.

7. Dispositif de guidage en translation ou en rotation suivant l'une des revendications précédentes 3 à 6, caractérisé en ce que le palier à roulement (5, 5′) est un palier à billes avec une bague intérieure et une bague extérieure, la bille de guidage (2, 2′) portant chaque fois sur la bague intérieure (10) et présentant un diamètre plus grand que son diamètre intérieur.

8. Dispositif de guidage en translation suivant la revendication 6, caractérisé en ce que chaque fois les billes de guidage (2, 2′) placées du même côté du rail (3) sont réglables dans leur position par déplacement axial du palier à roulement correspondant.

Fig.1

Fig.2

Fig.3